# EUROPÄISCHE PATENTANMELDUNG

(11) **EP 4 775 558 A1**
(43) Veröffentlichungstag der Anmeldung: **15.07.2026**
(21) Anmeldenummer: 26151640.5
(22) Anmeldetag: 13.01.2026
(51) Int. Cl.: C04B 28/00, C04B 28/02, E04G 21/00, E04G 21/20

(54) **TROCKENMÖRTELPLATTE ODER TROCKENMÖRTELBAND SOWIE VERFAHREN ZU DEREN ODER DESSEN HERSTELLUNG**

(30) Priorität: 13.01.2025 DE 102025100973
(71) Anmelder: Franken Maxit Mauermörtel GmbH & Co., 95359 Kasendorf (DE); Johann Bergmann GmbH & Co, 95359 Kasendorf (DE)
(72) Erfinder: Pöhner, Thorsten, 95359 Kasendorf (DE); Eberlein, Johannes, 95359 Kasendorf (DE); Andratschke, Christin, 95359 Kasendorf (DE); Groppweis, Sebastian, 95359 Kasendorf (DE)
(74) Vertreter: Dr. Solf & Zapf Patent- und Rechtsanwalts PartG mbB

(57) **Zusammenfassung**

Die vorliegende Erfindung betrifft eine Trockenmörtelplatte oder ein Trockenmörtelband zur Herstellung eines Frischmörtels Vermörtelung, vorzugsweise zur deckelnden Dünnbettvermörtelung, von Mauersteinen wie z.B. Hochlochplanziegeln, sowie ein Verfahren zur Herstellung einer derartigen Trockenmörtelplatte oder eines Trockenmörtelbandes.

## Beschreibung

Die vorliegende Erfindung betrifft eine Trockenmörtelplatte oder ein Trockenmörtelband zur Herstellung eines Frischmörtels zur Vermörtelung, vorzugsweise zur deckelnden Dünnbettvermörtelung, von Mauersteinen wie z.B. Hochlochplanziegeln, sowie ein Verfahren zur Herstellung einer derartigen Trockenmörtelplatte oder eines Trockenmörtelbandes.

Ein Mauerwerk ist bekanntermaßen ein aus Mauersteinen als Massivbau gefügtes Bauteil. Die Mauersteine sind nebeneinander und übereinander angeordnet. Zur Ausbildung des Mauerwerks sind jeweils mehrere Steinreihen übereinander angeordnet, wobei zwischen zwei übereinander angeordneten Steinreihen jeweils eine durchgehende, horizontale Lagerfuge vorhanden ist. Die übereinander angeordneten Mauersteine sind mittels einer in der Lagerfuge angeordneten, erhärteten Lagerfugenmörtelschicht miteinander vermörtelt.

Zur Herstellung der Lagerfugenmörtelschichten wird in an sich bekannter Weise ein Mauermörtel verwendet. Aus dem Mauermörtel wird mit Wasser ein Frischmörtel hergestellt und der Frischmörtel in an sich bekannter Weise zur Herstellung der Lagerfugenmörtelschicht auf die Steinreihen aufgetragen. Die Anforderungen an Werkmauermörtel sind in der DIN EN 998-2:2017-02 festgelegt. Und die Anwendung von Werkmauermörtel in Bauwerken ist in der DIN 20000-412:2019-06 geregelt.

Bei Werkmauermörteln handelt es sich um werksseitig vorgemischte Trockenmörtelmischungen (Werk-Trockenmörtel bzw. Werkmörtel). Trockenmörtelmischungen sind vorfabrizierte Trockenmischungen, bestehend aus zumindest einem mineralischen Bindemittel, zumindest einem Zuschlagstoff, in der Regel zumindest einem Zusatzstoff und/oder zumindest einem Zusatzmittel, die auf der Baustelle nur noch mit Wasser zu einem Frischmörtel verarbeitet werden müssen und damit gebrauchsfertig sind.

Die Trockenmörtelmischungen liegen dabei in der Regel in schüttfähiger Form vor. Sie können aber auch in verfestigter Form vorliegen, beispielsweise in einer Trockenmörtelplatte oder einem Trockenmörtelband.

Bei zementhaltigem Mörtel wird in der Regel zwischen Zusatzstoffen und Zuschlagstoffen unterschieden.

Zusatzstoffe sind fein verteilte Stoffe, die bestimmte Eigenschaften des Mörtels beeinflussen. Sie beeinflussen vorrangig die Verarbeitbarkeit des Frisch- und die Festigkeit und Dichtigkeit des Festmörtels. Im Gegensatz zu Zusatzmitteln ist die Zugabemenge im Allgemeinen so groß, dass sie bei der Stoffraumrechnung zu berücksichtigen ist. Zusatzstoffe dürfen das Erhärten des Zementes sowie die Festigkeit und Dauerhaftigkeit des Mörtels nicht beeinträchtigen. Bei den Zusatzstoffen wird unterschieden zwischen inaktiven (inerten) Zusatzstoffen und aktiven Zusatzstoffen, insbesondere puzzolanischen Zusatzstoffen und latent hydraulischen Zusatzstoffen, und organischen Zusatzstoffen. Inerte Zusatzstoffe reagieren nicht oder höchstens oberflächlich mit dem Bindemittel. Im Rahmen der Erfindung werden die aktiven Zusatzstoffe dem Bindemittelanteil zugerechnet, sofern sie zur Ausbildung der Bindemittelmatrix beitragen. Zusatzstoffe sind z.B. in der DIN EN 12620:2015-07 "Natürliche Gesteinsmehle" oder der DIN EN 15167-1:2006-12 "Hüttensandmehl zur Verwendung in Beton, Mörtel und Einpressmörtel" genormt. Zusatzstoffe gehören zum Mehlkornanteil des Mörtels. Zum Mehlkornanteil gehören alle Körner ≤ 0,125 mm.

Als Mehl bzw. Pulver werden im Rahmen der Erfindung alle Körnungen bezeichnet, deren Korngröße zumindest zu 85 M.-% ≤ 0,125 mm ist.

Zuschlagstoffe sind ebenfalls inert und gröber als Zusatzstoffe. Sie bestehen somit nicht ausschließlich aus Mehlkorn, können aber einen Mehlkornanteil aufweisen. Ihr Mehlkornanteil ist aber geringer als der von Zusatzstoffen. Unter Zuschlagstoffen (Gesteinskörnung) versteht man ein körniges Material für die Verwendung im Bauwesen. Gesteinskörnungen werden nach ihrer Herkunft, ihrem Gefüge, der Korngröße sowie der Kornrohdichte eingeteilt und können natürlich, industriell hergestellt oder rezykliert sein. Grundsätzlich unterscheidet man anhand der Kornrohdichte ρ_{Rg}, bestimmt nach DIN 4226, zwischen Leichtzuschlag (leichter Gesteinskörnung) (ρ_{Rg} < 2000 kg/m³), Normalzuschlag (normaler Gesteinskörnung) (ρ_{Rg} = 2000-3000 kg/m³) und Schwerzuschlag (schwerer Gesteinskörnung) (ρ_{Rg} > 3000 kg/m³).

Unterschieden wird zudem zwischen geschlossenporigen leichten Gesteinskörnungen (geschlossenporiger Leichtzuschlag) wie Blähton und Blähglas mit geschlossenporigen Leichtzuschlagkörnern und offenporigen leichten Gesteinskörnungen (offenporiger Leichtzuschlag) wie Bims, geblähter Vermiculit und Blähperlit mit offenporigen Leichtzuschlagkörnern wie folgt: Die durch einen Bläh- bzw. Sinterprozess hergestellten geschlossenporigen Leichtzuschlagkörner weisen im Inneren ein stark vernetztes Porensystem und eine vergleichsweise dichte Sinterhaut auf. Die Sinterhaut weist kapillar hoch aktive Sinterporen mit einem Durchmesser von ca. 0,01 bis 40 µm auf. Auch geschlossenporige Leichtzuschlagkörner sind also an der Kornoberfläche nicht vollständig geschlossen. Geschlossenporige Leichtzuschlagkörner saugen am Anfang sehr schnell. Dann nimmt die Wasseraufnahme mit der Zeit stark ab. Offenporige Leichtzuschlagkörner hingegen weisen eine gleichmäßig verteilte, hohe Porosität über den gesamten Kornquerschnitt auf. Sie besitzen ein sehr hohes kapillares Saugvermögen und sind innerhalb weniger Sekunden bis Minuten wassergesättigt.

Zusatzmittel werden dem Trockenmörtel zugesetzt, um durch chemische oder physikalische Wirkung oder durch beides die Eigenschaften des Frisch- oder Festmörtels - wie z.B. Verarbeitbarkeit, Erstarren, Erhärten oder Frostwiderstand - zu beeinflussen. Zusatzmittel werden in so geringen Mengen zugegeben (< 5 M.-% des Zementanteils), dass sie als Raumanteil des Mörtels ohne Bedeutung sind. Zusatzmittel werden flüssig, pulverförmig oder als Granulat geliefert. In Trockenmörtelmischungen sind sie trocken, insbesondere pulverförmig oder als Granulat, enthalten. Zusatzmittel für Mörtel sind z.B. in der DIN EN 934-2:2012-08 "Zusatzmittel für Beton, Mörtel und Einpressmörtel" genormt.

Lehmmauermörtel ist zudem in der DIN 18946:2024-03 genormt. Gemäß der DIN 18946:2024-03 weist Lehmmauermörtel Baulehm sowie ggf. Zusatzstoffe auf, wobei es sich hierbei beispielsweise um mineralische Zusatzstoffe wie natürliche Gesteinskörnung gemäß DIN EN 12620 handeln kann. Oder es kann sich um organische Zusatzstoffe wie Pflanzenteile und- fasern oder Tierhaare oder zerkleinertes Holz handeln.

Infolgedessen werden im Rahmen der Erfindung allgemein inerte körnige Zusatzstoffe und inerte Zuschlagstoffe als Körnungen bezeichnet. Zudem werden "Zusatzstoffe" und "Zuschlagstoffe" wie oben angegeben anhand ihrer Korngröße voneinander unterschieden.

Fasern (auch Tierhaare) werden als eigenständige Kategorie betrachtet.

Beim Mauermörtel unterscheidet man zudem unter anderem zwischen Dickbettmörtel und Dünnbettmörtel. Dünnbettmörtel wird für Plansteine, z.B. Planziegel, verwendet, also bei Mauersteinen, die eine geringe Maßabweichung in der Steinhöhe aufweisen. Dünnbettmörtel wird in der Regel in einer Fugendicke von 1-3 mm verarbeitet.

Die Mauersteine sind dabei oftmals als Lochsteine mit Hochlöchern ausgeführt. Aufgrunddessen muss sichergestellt werden, dass die frische Dünnbettmörtelschicht deckelnd ist, das heißt die Hochlöcher abdeckt und nicht in diese hinein fällt. "Gedeckelt" bzw. "deckelnd" bedeutet somit, dass eine die Hochlöcher der Hochlochsteine abdeckende, durchgehende Lagerfugenmörtelschicht erzeugt wird.

Aus der DE 10 2004 033 945 A1 geht beispielsweise ein Mörtelband aus Trockenmörtel zum Verkleben von Mauersteinen, Fliesen oder dergleichen hervor. Das Mörtelband umfasst ein Trägerband und eine darauf aufgebrachte trockene Mischung aus Zementmörtel und einem Bindemittel, wobei das Bindemittel eine wasserlösliche Matrix mit einem Schmelzpunkt oberhalb 40°C ist, ausgewählt aus den Gruppen organische Polymere, hydratisierte Salze, Carbonsäuren und deren Salzen, hydrophobe Stoffe in Verbindung mit hydrophilierenden Substanzen sowie Zucker oder Harnstoff. Dabei ist die auf das Trägerband aufgebrachte Mischung durch Wärmebehandlung mit diesem verbunden und durch nachfolgende Abkühlung verfestigt. Die Mischung kann auch beidseits des Trägerbands angeordnet sein. Nach einer bevorzugten Ausführungsform ist die auf dem Trägerband angeordnete Mischung durch in Querrichtung verlaufende Kerben oder Zwischenräume in Segmente etwa gleicher Länge unterteilt. Über die Kerben kann überschüssiges Wasser beim Bewässern ablaufen. Die Herstellung des Mörtelbandes erfolgt durch Aufbringen einer trockenen Mischung aus Zementmörtel und Bindemittel auf ein Trägerband, Wärmebehandlung und nachfolgendes Abkühlen. Gemäß der DE 10 2004 033 945 A1 kann das Mörtelband auch in Form abgelängter, fester Platten vorliegen.

Die DE 10 2013 007 800 A1 offenbart eine Trockenmörtelplatte aufweisend zumindest eine Trockenmörtelschicht, wobei die Trockenmörtelschicht eine mittels eines wasserlöslichen Klebemittels verfestigte Trockenmörtelmischung aufweist. Die Trockenmörtelmischung besteht aus einem mineralischen, insbesondere hydraulischen, Bindemittel, Zuschlag und gegebenenfalls zumindest einem Zusatzstoff und/oder zumindest einem Zusatzmittel. Zudem weist die Trockenmörtelmischung, bezogen auf die Trockenmasse der Trockenmörtelmischung, 5 bis 35 Gew.%, bevorzugt 10 bis 25 Gew.% Leichtzuschlag aus offenporigen und/oder geschlossenporigen Leichtzuschlagkörnern auf. Das Klebemittel entspricht dem Bindemittel der DE 10 2004 033 945 A1.

Die DE 10 2013 007 800 A1 offenbart zudem eine Vorrichtung und ein Verfahren zur Herstellung der Trockenmörtelplatte.

Die WO 2023/012181 offenbart einen trockenen, werksseitig angemischten Mauermörtel (Werkmauermörtel) für die Herstellung einer Lagerfugenmörtelschicht eines Mauerwerks und einen den Werkmauermörtel enthaltenden Trockenmörtelformkörper, insbesondere eine Trockenmörtelplatte. Der Werkmauermörtel weist zumindest ein mineralisches, insbesondere hydraulisches, Bindemittel, vorzugsweise zumindest einen, bevorzugt mineralischen, insbesondere offenporigen oder geschlossenporigen, Leichtzuschlagstoff, zumindest ein Polysaccharid-Verdickungsmittel, zumindest ein mineralisches Verdickungsmittel und Mikrohohlglaskugeln mit einer Korngröße ≤ 0,125 mm als Zusatzstoff auf. Die Mikrohohlglaskugeln sind bekanntermaßen geschlossenzellig und einzellig ausgebildet.

Aufgabe der vorliegenden Erfindung ist die Bereitstellung einer nachhaltigen Trockenmörtelplatte, die zumindest eine mit einem wasserlöslichen, schmelzbaren Klebemittel verfestigte Trockenmörtelschicht aufweist, wobei die Trockenmörtelplatte, kostengünstig herstellbar, gut handlebar und gut verarbeitbar sein soll.

Weitere Aufgabe ist die Bereitstellung eines Verfahrens zur Herstellung der Trockenmörtelplatte.

Diese Aufgaben werden durch eine Trockenmörtelplatte gemäß Anspruch 1 sowie ein Verfahren gemäß Anspruch 20 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Schematisch einen Längsschnitt durch eine erfindungsgemäße Trockenmörtelplatte gemäß einer ersten Ausführungsform
- Figur 2:: Eine schematische Draufsicht auf die Trockenmörtelplatte gemäß Fig. 1

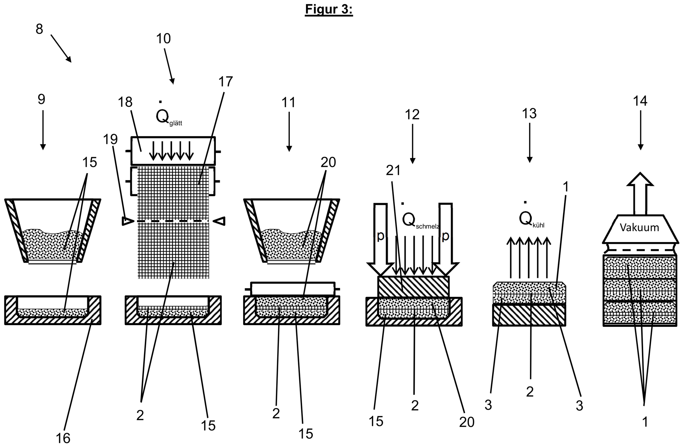

- Figur 3:: Eine rein schematische Darstellung der erfindungsgemäßen Vorrichtung

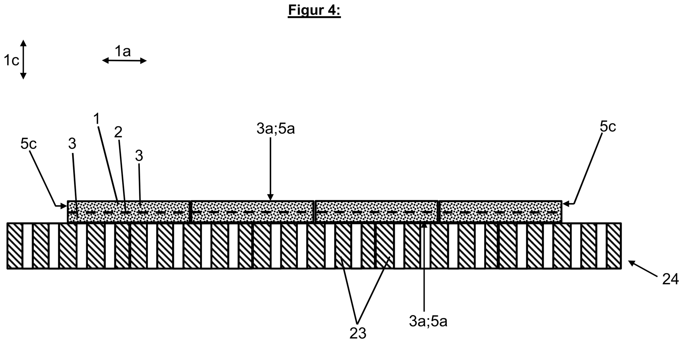

- Figur 4:: Schematisch einen Längsschnitt durch eine Mauersteinreihe mit einer darauf angeordneten Reihe aus erfindungsgemäßen Trockenmörtelplatten
- Figur 5:: Schematisch einen Längsschnitt durch zwei übereinander angeordnete Mauersteinreihen eines Mauerwerks mit einer dazwischen angeordneten Frischmörtelschicht
- Figur 6:: Schematisch einen Längsschnitt durch eine erfindungsgemäße Trockenmörtelplatte gemäß einer weiteren Ausführungsform

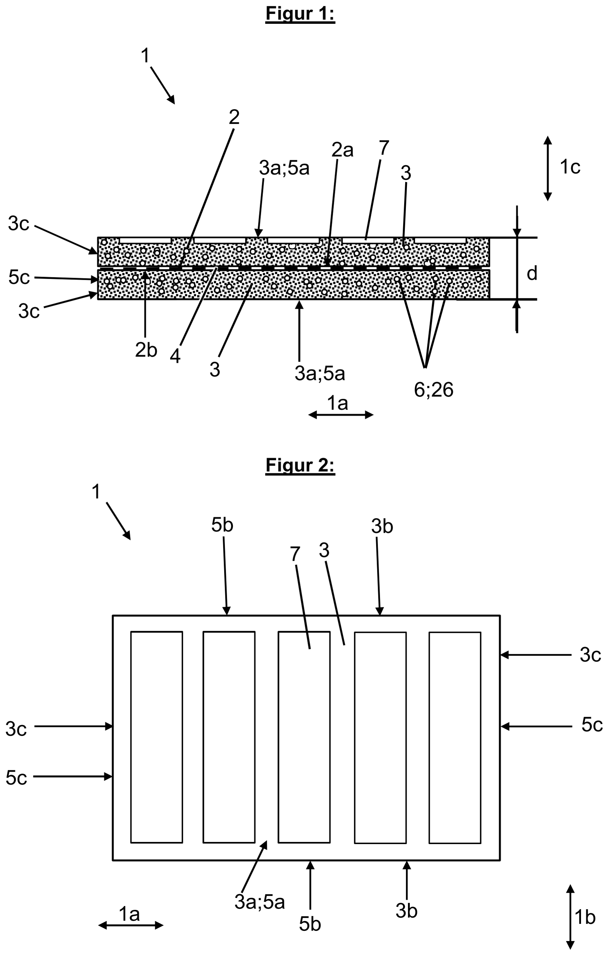

Die erfindungsgemäße, insbesondere quaderförmige, Trockenmörtelplatte 1 weist gemäß einer ersten Ausführungsform der Erfindung ein Trägerband 2 auf, auf dem zumindest einseitig, vorzugsweise beidseits (Fig. 1,2), eine mittels eines wasserlöslichen Klebemittels verfestigte Trockenmörtelschicht 3 angeordnet ist. Die Trockenmörtelplatte 1 weist eine Plattenlängsrichtung 1a, eine dazu senkrechte Plattenquerrichtung 1b und eine sowohl zur Plattenlängsrichtung 1a als auch zur Plattenquerrichtung 1b senkrechte Plattenhöhenrichtung bzw. -dickenrichtung 1c auf.

Bei dem, insbesondere rechteckigen, Trägerband 2 handelt es sich um ein, insbesondere textiles, Flächengebilde. Vorzugsweise handelt es sich bei dem Trägerband 2 um ein Gewebe und/oder Gewirke und/oder ein Vlies und/oder ein Gestricke. Das Trägerband 2 besteht vorzugsweise aus Cellulosefasern, bevorzugt Baumwollfasern und/oder Jutefasern und/oder Holzfasern und/oder Leinenfasern, und/oder Polyesterfasern und/oder Glasfasern und/oder Carbonfasern und/oder Basaltfasern. Insbesondere handelt es sich um ein einlagiges Gewebe (2D-Gewebe) oder eine mehrlagiges Gewebe, dessen einzelne Gewebelagen vernäht sind, aber voneinander beabstandet sind (3D-Gewebe). Zudem weist das Trägerband 2 eine erste Trägerbandoberseite 2a und eine dieser gegenüberliegende, zweite Trägerbandoberseite 2b auf. Die beiden Trägerbandoberseiten 2a;2b liegen sich in Plattendickenrichtung 1c gegenüber. Dabei weist das Trägerband 2 über seine gesamte flächenmäßige Erstreckung gesehen Durchbrüche bzw. Löcher 4 auf, die von der ersten zur zweiten Trägerbandoberseite 2a;2b durchgehen. Im Falle des Gewebes handelt es sich bei den Löchern 4 z.B. um die Zwischenräume zwischen den Kett- und Schussfäden. Die Löcher 4 weisen vorzugsweise einen Querschnitt von 2 mm x 2 mm bis 50 mm x 50 mm, bevorzugt 4 mm x 4 mm bis 10 mm x 10 mm auf. Bei großen Maschenweiten weisen die Trockenmörtelmischungen vorzugsweise eine Bewehrung in Form von Einzelfasern auf.

Wie bereits erläutert ist sowohl auf der ersten Trägerbandoberseite 2a als auch auf der zweiten Trägerbandoberseite 2b jeweils zumindest eine Trockenmörtelschicht 3 angeordnet. Das Trägerband 2 ist zumindest einseitig, vorzugsweise beidseits durch zumindest eine Trockenmörtelschicht 3 abgedeckt. Das Trägerband 2 ist somit zwischen den beiden Trockenmörtelschichten 3 angeordnet. Die beiden Trockenmörtelschichten 3 liegen sich in Plattendickenrichtung 1c gegenüber. Dabei durchdringen die beiden Trockenmörtelschichten 3 vorzugsweise die Löcher 4 in dem Trägerband 2 und sind dadurch miteinander und mit dem Trägerband 2 verbunden.

Die, insbesondere quaderförmigen, Trockenmörtelschichten 3 weisen jeweils eine dem Trägerband 2 abgewandte, äußere Schichtoberseite 3a, sowie zwei sich gegenüberliegende und zueinander parallele Schichtseitenkanten 3b und zwei sich gegenüberliegende, zu den Schichtseitenkanten 3b senkrechte Schichtstirnkanten 3c auf. Die Schichtseitenkanten 3b und die Schichtstirnkanten 3c der ersten und zweiten Trockenmörtelschicht 3 schließen dabei jeweils vorzugsweise paarweise bündig miteinander ab und bilden Plattenseitenkanten 5b bzw. Plattenstirnkanten 5c der Trockenmörtelplatte 1. Und die beiden äußeren Schichtoberseiten 3a bilden jeweils eine Plattenoberseite 5a der Trockenmörtelplatte 1. Des Weiteren erstrecken sich die Schichtseitenkanten 3b und somit die Plattenseitenkanten 5b parallel zur Plattenlängsrichtung 1a und die Schichtstirnkanten 3c und die Plattenstirnkanten 5c erstrecken sich parallel zur Plattenquerrichtung 1b.

Die Trockenmörtelschichten 3 bestehen jeweils aus einer Trockenmörtelmischung, die mittels eines wasserlöslichen, schmelzbaren Klebemittels verfestigt ist.

Die Trockenmörtelmischung 3 weist eine Bindemittelkomponente mit zumindest einem mineralischen Bindemittel sowie zumindest eine, vorzugsweise mineralische, Körnung aus inerten Körnern 26 auf. Vorzugsweise weist die Trockenmörtelmischung zumindest einen, vorzugsweise mineralischen, Zuschlagstoff und vorzugsweise eine Zusatzstoffkomponente aus zumindest einem, vorzugsweise mineralischen, Zusatzstoff auf.

Erfindungsgemäß weist die Bindemittelkomponente dabei Lehmpulver als mineralisches Bindemittel auf.

Bei Lehm handelt es sich bekanntermaßen um eine Mischung aus Sand, Schluff und Ton. Lehm entsteht entweder durch Verwitterung aus Fest- oder Lockergesteinen oder durch die unsortierte Ablagerung der genannten Bestandteile. Für die Herstellung von Baulehm wird der Grubenlehm entsprechend aufbereitet. Insbesondere wird er gebrochen, so dass er keine Steine mehr enthält. Für die Verwendung als Bindemittel wird der aufbereitete Baulehm zusätzlich gesiebt und getrocknet. Er wird dann auch als Lehmpulver bezeichnet und kann als Bindemittel verwendet werden. Lehmpulver als Bindemittel erhärtet dabei bekanntermaßen ausschließlich durch die Abgabe des Anmachwassers, also durch Trocknung. Es handelt sich um eine rein physikalische Härtung.

Vorzugsweise weist das Lehmpulver der Trockenmörtelmischung einen d₉₀-Wert ≤ 90 µm, bevorzugt ≤ 63 µm, auf.

Korngrößen(verteilungen) werden, falls nicht anders angegeben, immer durch Bestimmung des Siebdurchgangs mittels Luftstrahlsiebung gemäß DIN EN 933-10-2009-10 und DIN EN 1015-1:2007-05 ermittelt, auch wenn dies nicht explizit erwähnt ist.

Des Weiteren weist die Trockenmörtelmischung vorzugsweise 30 bis 86 M.-%, bevorzugt 40 bis 78 M.-%, besonders bevorzugt 50 bis 78 M.-%, Lehmpulver auf.

Bzw. vorzugsweise weist die Trockenmörtelmischung mindestens 30 M.-%, bevorzugt mindestens 40 M.-%, besonders bevorzugt mindestens 50 M.-%, Lehmpulver auf.

Die die Trockenmörtelmischung betreffenden Mengenangaben beziehen sich, falls nicht anders angegeben, immer auf die Trockenmasse der Trockenmörtelmischung, auch wenn dies nicht explizit erwähnt ist.

Und die Bindemittelkomponente besteht vorzugsweise zu mindestens 80 M.-%, bevorzugt zu mindestens 90 M.-%, bevorzugt zu 100 M.-% aus Lehmpulver.

Vorzugsweise ist weist die Bindemittelkomponente insbesondere keinen Zementklinker auf.

Vorzugsweise weist die Trockenmörtelmischung zudem eine Leichtstoffkomponente aus zumindest einem, vorzugsweise mineralischen, Leichtstoff aus Leichtstoffkörnern 6 auf.

Die Leichtstoffkomponente der Trockenmörtelmischung umfasst alle Leichtstoffe der Trockenmörtelmischung mit einer Kornrohdichte < 2,0 kg/dm³ gemäß DIN EN 459-2:2021-09. Ein Leichtstoff im Sinne der Erfindung weist somit eine Kornrohdichte < 2,0 kg/dm³ gemäß DIN EN 459-2:2021-09 auf. Es kann sich also bei einem Leichtstoff um einen Leichtzuschlag und/oder einen leichten Zusatzstoff handeln. Ein Leichtstoff besteht zudem aus vielen Leichtstoffkörnern 6.

Gemäß einer besonders bevorzugten Ausführungsform der Erfindung weist die Trockenmörtelmischung bzw. die Leichtstoffkomponente Mikrohohlglaskugeln auf. bei Mikrohohlglaskugeln handelt es sich um geschlossenzellige Leichtstoffkörner 6. Geschlossenzellige Leichtstoffkörner 6 bzw. geschlossenzellige Körner an sich weisen eine geschlossene Kornoberfläche ohne Poren auf. Dadurch kann kein Wasser in die Körner eindringen.

Die Mikrohohlglaskugeln weisen eine Kugelwandung mit einer geschlossenen Kugeloberfläche auf. Die Kugelwandung umgibt einen Kugelinnenraum. Zudem sind die Mikrohohlglaskugeln einzellig ausgebildet. Das heißt, der Kugelinnenraum ist nicht in mehrere Zellen unterteilt, sondern einzellig ausgebildet.

Vorzugsweise weist die Trockenmörtelmischung insgesamt 11 bis 22 M.-%, bevorzugt 11 bis 21 M.-% oder 13 bis 21 M.-%, besonders bevorzugt 11 bis 20 M.-% oder 15 bis 20 M.-%, geschlossenzellige Mikrohohlglaskugeln mit einer Korngröße ≤ 0,125 mm, bestimmt mittels Laserlichtbeugung gemäß ISO 13320:2020-01, auf.

Mittels Laserlichtbeugung werden bekanntermaßen die Korngrößen und die zugehörige massen- bzw. volumenbezogene Kornverteilung ermittelt.

Und/oder vorzugsweise weist die Trockenmörtelmischung insgesamt 11 bis 22 M.-%, bevorzugt 11 bis 21 M.-% oder 13 bis 21 M.-%, besonders bevorzugt 11 bis 20 M.-% oder 15 bis 20 M.-%, geschlossenzellige Mikrohohlglaskugeln mit einer Korngröße ≤ 63 µm, bestimmt mittels Laserlichtbeugung gemäß ISO 13320:2020-01, auf.

Bzw. vorzugsweise weist die Trockenmörtelmischung 3 Mikrohohlglaskugeln mit einer Korngröße ≤ 125 µm in einer Volumenmenge von 46 bis 66 Vol.-%, bevorzugt 50 bis 65 Vol.-%, besonders bevorzugt 54 bis 63 Vol.-%, bezogen auf das Gesamtvolumen der Trockenmörtelmischung, bestimmt mittels Laserlichtbeugung gemäß ISO 13320:2020-01, auf.

Bzw. vorzugsweise weist die Trockenmörtelmischung 3 Mikrohohlglaskugeln mit einer Korngröße ≤ 63 µm in einer Volumenmenge von 46 bis 66 Vol.-%, bevorzugt 50 bis 65 Vol.-%, besonders bevorzugt 54 bis 63 Vol.-%, bezogen auf das Gesamtvolumen der Trockenmörtelmischung, bestimmt mittels Laserlichtbeugung gemäß ISO 13320:2020-01, auf.

Die Mikrohohlglaskugeln weisen zudem vorzugsweise einen d₅₀-Wert von 20 bis 80 µm, bevorzugt 30 bis 70 µm, bestimmt mittels Laserlichtbeugung gemäß ISO 13320:2020-01, und/oder einen d₉₀-Wert von 40 bis 100 µm, bevorzugt 50 bis 85 µm, bestimmt mittels Laserlichtbeugung gemäß ISO 13320:2020-01, auf.

Des Weiteren weisen die Mikrohohlglaskugeln vorzugsweise eine Schüttdichte gemäß DIN EN 459-2:2010-12, von 0,06 bis 0,50 g/cm³, bevorzugt von 0,07 bis 0,17 g/cm³, auf.

Zudem weisen die Mikrohohlglaskugeln vorzugsweise eine Partikelrohdichte von 0,10 bis 0,60 g/cm³, bevorzugt von 0,13 bis 0,50 g/cm³, besonders bevorzugt von 0,13 bis 0,17 g/cm³, auf.

Die Mikrohohlglaskugeln bestehen zudem vorzugsweise aus Borsilikatglas oder Kalknatronglas (Recyclingglas).

Vorzugsweise weist die Leichtstoffkomponente zudem zumindest einen Leichtzuschlagstoff auf.

Vorzugsweise weist die Leichtstoffkomponente zumindest einen geschlossenporigen Leichtzuschlagstoff auf, bevorzugt Blähglas und/oder Blähton.

Die Trockenmörtelmischung weist zudem offenporigen Leichtzuschlag in einer Gesamtmenge von höchstens 10 M.-%, vorzugsweise höchstens 5 M.-%, bevorzugt höchstens 2 M.-%, bezogen auf die Trockenmasse der Trockenmörtelmischung auf. Besonders bevorzugt weist sie keinen offenporigen Leichtzuschlag auf.

Es hat sich nämlich im Rahmen der Erfindung herausgestellt, dass es für die Durchwässerung vorteilhaft ist, wenn die Trockenmörtelschicht nur einen sehr geringen Anteil an offenporigen Leichtzuschlagkörnern aufweist, da diese das Anmachwasser entziehen und gegebenenfalls aufquellen, so dass eine Verdichtung stattfindet und das Anmachwasser schlechter durchsickert.

Der zumindest eine Leichtzuschlagstoff weist vorzugsweise eine Korngröße ≤ 3 mm, bevorzugt ≤ 2 mm auf.

Des Weiteren weist die Trockenmörtelmischung vorzugsweise zumindest einen normalen und/oder gegebenenfalls zumindest einen schweren Zuschlagstoff, vorzugsweise Quarzsand, auf. Dieser dient dazu, die Mörtelmatrix zu stabilisieren und verbessert die Festigkeit des erhärteten Mörtels. Vorzugsweise weist die Trockenmörtelmischung 3 bis 55 M.-%, bevorzugt 3 bis 20 M.-%, besonders bevorzugt 4 bis 15 M.-% normalen Zuschlag auf.

Der zumindest eine normale Zuschlagstoff weist vorzugsweise eine Korngröße ≤ 3 mm, bevorzugt ≤ 2 mm auf.

Außerdem kann die Trockenmörtelmischung bzw. die Zusatzstoffkomponente zudem, insbesondere zusätzlich zu den Mikrohohlglaskugeln, zumindest einen weiteren inaktiven bzw. inerten Zusatzstoff, vorzugsweise Gesteinsmehl, bevorzugt Kalksteinmehl und/oder Dolomitmehl und/oder Quarzmehl, und/oder gefälltes Calciumcarbonat (PCC), aufweisen. Vorzugsweise beträgt der Gesamtanteil an weiterem Zusatzstoff ≤ 50 M.-%, bevorzugt ≤ 30 M.-%. Und/oder vorzugsweise beträgt der Gesamtanteil an weiterem Zusatzstoff zudem mindestens 4 M.-%, bevorzugt mindestens 6 M.-%.

Die Trockenmörtelmischung kann zudem Fasern aufweisen. Diese werden im Rahmen der Erfindung als eigenständige Kategorie betrachtet.

Die Trockenmörtelmischung weist zudem vorzugsweise zumindest ein Zusatzmittel, bevorzugt zumindest ein, bevorzugt organisches, Verdickungsmittel und/oder zumindest ein, bevorzugt organisches, Wasserretentionsmittel. Das Verdickungsmittel verbessert die Festigkeit des erhärteten Mörtels. Und das Wasserretentionsmittel führt zu einer Reduzierung der Schwindrisse beim Austrocknen.

Vorzugsweise weist die Trockenmörtelmischung zumindest ein Polysacharid-Verdickungsmittel auf. Bei dem Polysaccharid-Verdickungsmittel handelt es sich zudem vorzugsweise um Xanthan. Vorzugsweise weist die Trockenmörtelmischung 0,002 bis 0,5 M.-%, bevorzugt 0,004 bis 0,1 M.-% Polysaccharid-Verdickungsmittel, bevorzugt Xanthan, auf.

Zudem weist die Trockenmörtelmischung vorzugsweise 0,2 bis 1,0 M.-%, bevorzugt 0,3 bis 0,8 M.-% Wasserretentionsmittel, vorzugsweise Celluloseether, bevorzugt Methylcellulose, auf.

Bei dem Klebemittel handelt es sich wie bereits erläutert um einen wasserlöslichen, erhärteten Schmelzklebstoff. Das Klebemittel bildet eine Feststoff-Klebematrix, welche die einzelnen Bestandteile der Trockenmörtelmischung miteinander und mit dem Trägerband 2 verbindet. Die Verbindung erfolgt dabei durch Aufschmelzen und anschließendes Abkühlen des Klebemittels, worauf weiter unten näher eingegangen wird. Infolgedessen ist das Klebemittel mit den Bestandteilen der Trockenmörtelmischung und dem Trägerband 2 verschmolzen bzw. verbacken. Vorzugsweise weist das Klebemittel als Hauptbestandteil eine wasserlösliche Komponente auf, ausgewählt aus den Gruppen organische Polymere, hydratisierte Salze, Carbonsäuren und deren Salze, hydrophobe Stoffe in Verbindung mit hydrophilierenden Substanzen, sowie Zucker oder Harnstoff oder Harnstoff-Derivate oder Hydantoin oder Hydantoin-Derivate, wobei diese wasserlösliche Komponente einen Schmelzpunkt zwischen 30°C und 190°C hat. Vorzugsweise weist das Klebemittel einen Schmelzpunkt von 120 bis 190 °C, bevorzugt 140 bis 150 °C auf.

Bezüglich weiterer möglicher Zusammensetzungen des Klebemittels wird auf die DE 10 2004 033 945 B4 verwiesen. Das Klebemittel kann zudem auch ein zumindest teilweise denaturiertes Tierblutprotein aufweisen. Insbesondere kann es auch zusammengesetzt sein wie in der DE 10 2017 112 282 A1 beschrieben.

Vorzugsweise weist die Trockenmörtelplatte 1 zudem in zumindest einer der beiden Schichtoberseiten 3a bzw. Plattenoberseiten 5a zumindest eine, vorzugsweise mehrere, wannenartige bzw. muldenartige bzw. beckenartige Vertiefungen 7 zur Aufnahme einer definierten Wassermenge bei der Wässerung der erfindungsgemäßen Trockenmörtelplatte 1 auf. Die wannenartigen Vertiefungen 7 dienen als geschlossene Wasserreservoirs bzw. in sich geschlossenes Behältnis zur Speicherung einer definierten Wassermenge, worauf weiter unten näher eingegangen wird. Die wannenartigen Vertiefungen 7 sind vorzugsweise in Plattenlängsrichtung 1a benachbart zueinander angeordnet und weisen eine Längserstreckung parallel zur Plattenquerrichtung 1b auf. Vorzugsweise sind die wannenartigen Vertiefungen ausgebildet wie in der DE 10 2013 007 800 A1 beschrieben.

Die Dicke d, also die Erstreckung in Plattendickenrichtung 1c, der erfindungsgemäßen Trockenmörtelplatte 1 beträgt vorzugsweise 1,5 bis 100 mm, bevorzugt 2 bis 40 mm, besonders bevorzugt 2 bis 20 mm, ganz besonders bevorzugt 2 bis 10 mm, je nachdem ob die Trockenmörtelplatte 1 zur Herstellung einer Dünnbettmörtelschicht oder einer Dickbettmörtelschicht verwendet werden soll.

Die Herstellung der erfindungsgemäßen Trockenmörtelplatte 1 erfolgt vorzugsweise wie in der DE 10 2013 007 800 A1 beschrieben mittels der in der DE 10 2013 007 800 A1 beschriebenen Vorrichtung.

Die Vorrichtung 8 zur Herstellung der erfindungsgemäßen Trockenmörtelplatte 1 weist somit eine erste Mörtelauftrageinrichtung 9, eine Trägerbandauflegeinrichtung 10, eine zweite Mörtelauftrageinrichtung 11, vorzugsweise eine Vorheizeinrichtung, eine Presseinrichtung 12, vorzugsweise eine Entformungsvorrichtung, eine Kühlstrecke bzw. Abkühleinrichtung 13, vorzugsweise eine Kontrolleinrichtung, und eine Verpackeinrichtung 14 auf.

Mittels der ersten Mörtelauftrageinrichtung 9 wird eine erste trockene, schüttfähige Mischung 15 bestehend aus der Trockenmörtelmischung und dem Klebemittel in Granulat- oder Pulverform für die erste Trockenmörtelschicht 3 mit der profilierten Plattenoberseite 5a in Kassettenformen 16 eingebracht, die vorzugsweise einen profilierten Formenboden zur Ausbildung der wannenartigen Vertiefungen 7 aufweisen. Die erste trockene Mischung 15 weist vorzugsweise 5 bis 30 M.-%, bevorzugt 10 bis 20 M.-%, Klebemittel auf, bezogen auf die Trockenmasse der Mischung 15.

Die Trägerbandauflegeeinrichtung 10 ist oberhalb der Kassettenformen 16 angeordnet und dient zum Auflegen des Trägerbandes 2 auf die erste trockene, lockere Mischung 15. Die Trägerbandauflegeeinrichtung 10 weist vorzugsweise eine Vorratsrolle mit einem darauf aufgewickelten endlosen Trägerbandmaterial 17, eine Glätteinrichtung 18 zum Glätten des endlosen Trägerbandmaterials 33, und eine Schneideinrichtung 19 zum Abschneiden des Trägerbandes 2 von dem geglätteten, endlosen Trägerbandmaterial 17 und Mittel zum Auflegen des abgeschnittenen Trägerbandes 2 auf die erste trockene Mischung 15 auf.

Mittels der zweiten Mörtelauftrageinrichtung 11 wird eine zweite trockene, schüttfähige Mischung 20 bestehend aus der Trockenmörtelmischung und dem Klebemittel in Granulat- oder Pulverform für die zweite Trockenmörtelschicht 3 auf das Trägerband 2 aufgebracht, insbesondere aufgestreut.

Die zweite trockene Mischung 20 ist von der Zusammensetzung her vorzugsweise identisch mit der ersten trockenen Mischung 15. Zumindest weist sie die gleichen Anteile Klebemittel auf.

Die trockenen, schüttfähigen Mischungen 15;20 werden insbesondere vor dem Einbringen in die Form hergestellt aus den Bestandteilen der jeweiligen Trockenmörtelmischung und dem Klebemittel. Die einzelnen Bestandteile der Trockenmörtelmischung werden somit jeweils als Rohstoffe für die Herstellung der Trockenmörtelplatte 1, insbesondere der jeweiligen Trockenmörtelschicht 3, bzw. der jeweiligen, trockenen, schüttfähigen Mischung, verwendet. Insbesondere wird erfindungsgemäß das Lehmpulver als Rohstoff verwendet.

Die vorzugsweise vorhandene Vorheizeinrichtung dient zum Vorheizen der trockenen Mischungen 15;20. Insbesondere werden die trockenen Mischungen 15;20 auf die gleiche Ausgangstemperatur gebracht.

Mittels der Presseinrichtung 12 werden die beiden trockenen Mischungen 15;20 und das dazwischen angeordnete Trägerband 2 gleichzeitig mit Druck und Temperatur beaufschlagt. Vorzugsweise werden mehrere Kassettenformen 16 gleichzeitig beaufschlagt. Dazu weist die Presseinrichtung 25 zumindest eine, insbesondere mehrere, zu den Kassettenformen 29 korrespondierende bzw. passende, beheizte Formendeckel 21 auf. Die Formendeckel 21 werden von oben auf jeweils eine der Kassettenformen 16 aufgesetzt, so dass jeweils eine geschlossene Pressform gebildet wird. In der Pressform werden die trockenen Mischungen 15;20 komprimiert und gleichzeitig derart aufgeheizt, dass das Klebemittel schmilzt. Das flüssige Klebemittel verteilt sich nun in den Mischungen 15;20, verbindet sich mit den Bestandteilen der Trockenmörtelmischungen. Es bilden sich die beiden Trockenmörtelschichten 3. Zudem werden sowohl die festen, nicht schmelzbaren Bestandteile der Trockenmörtelmischungen als auch das Klebmittel durch die Löcher 4 im Trägerband 2 durchgedrückt und die beiden Trockenmörtelschichten 3 miteinander und mit dem Trägerband 2 verbunden.

Vorzugsweise liegt der aufgebrachte Druck bei 0,1 bis 20 bar oder bei 0,2 bis 20 bar, bevorzugt bei 2 bis 6 bar. Besonders bevorzugt liegt der Druck bei 0,1 bis 3 bar oder 0,2 bis 3 bar, insbesondere bei 0,5 bis 2,5 bar. Vorzugsweise liegt die Temperatur bei 30 bis 250 °C, bevorzugt bei 100 bis 170 °C. Der Pressvorgang dauert dabei vorzugsweise 10 bis 500 s, bevorzugt 10 bis 200 s.

Nach dem Pressvorgang werden die Pressformen wieder geöffnet, indem die Formendeckel 21 von den Kassettenformen 16 abgenommen werden. Dadurch, dass die Kassettenformen 16 die Negativform der wannenartigen Vertiefungen 7 aufweisen, werden die wannenartigen Vertiefungen 7 beim Pressvorgang in die Trockenmörtelplatte 1 eingebracht, insbesondere eingedrückt.

Nun werden Trockenmörtelplatten 1 entformt und anschließend in der Kühleinrichtung 13 abgekühlt. Die Trockenmörtelplatten 1 kühlen derart ab, dass das Klebemittel erhärtet und die verfestigte, erhärtete Feststoff-Klebematrix ausbildet.

Mittels der vorzugsweise vorhandenen Kontrolleinrichtung werden noch beispielsweise das Gewicht und/oder die Oberfläche und/oder die Bruchfreiheit kontrolliert. Und mittels der Verpackeinrichtung 14 werden die Trockenmörtelplatten 1 noch vorzugsweise in eine Kartonschale gepackt und mit einer Folie umhüllt oder in einen Tiefziehbeutel gepackt.

Das erfindungsgemäße Verfahren kann dabei z.B. derart realisiert werden, dass sich die einzelnen Einrichtungen 9;10;11, insbesondere beim Aufstreuen und Ablegen, relativ zu den Kassettenformen 16 bewegen und die Kassettenformen 16 ruhen. Allerdings kann dies auch umgekehrt sein oder eine überlagerte Relativbewegung stattfinden.

Wie bereits erläutert, werden die erfindungsgemäßen Trockenmörtelplatten 1 vorzugsweise zur Herstellung einer Frischmörtelschicht 22 zur deckelnden Dünnbettvermörtelung von Mauersteinen 23, vorzugsweise Hochlochziegeln, verwendet. Dazu werden die einzelnen Trockenmörtelplatten 1 in einer Reihe auf eine erste, untere Mauersteinreihe 24 aufgelegt. Die erste Mauersteinreihe 24 besteht in an sich bekannter Weise aus Mauersteinen 23, die unter Ausbildung jeweils einer Stoßfuge auf Stoß aneinander gesetzt sind. Auf die erste Mauersteinreihe 24 werden die Trockenmörtelplatten 1 aufgelegt und dabei ebenfalls vorzugsweise mit ihren Plattenstirnkanten 5c auf Stoß, unter Ausbildung einer Stoßfuge, aneinander gesetzt. Des Weiteren werden die Trockenmörtelplatten 1 so aufgelegt, dass die profilierte Plattenoberseite 5a nach oben weist.

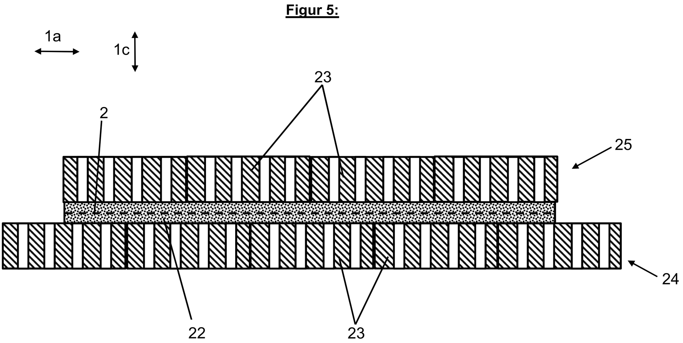

Nach dem Auflegen der Trockenmörtelplatten 1 werden diese, z.B. mit einer Gießkanne, bewässert. Dabei werden die wannenartigen Vertiefungen 7 mit Wasser aufgefüllt. Überschüssiges Wasser fließt über die wannenartigen Vertiefungen 7 über und ab. Dadurch ist sichergestellt, dass genau die richtige Menge zur Bewässerung der Trockenmörtelplatten 1 zur Verfügung steht. Das Wasser sickert in die Trockenmörtelplatten 1 ein, fließt durch das wasserdurchlässige Trägerband 2 durch, benetzt die einzelnen Bestandteile der Trockenmörtelmischungen und löst nach und nach das Klebemittel auf, so dass aus den Trockenmörtelplatten 1 jeweils einzelne, bewehrte Frischmörtelschichten entstehen. Die einzelnen, zueinander benachbarten Frischmörtelschichten grenzen dabei direkt aneinander an und gehen dadurch ineinander über, so dass sich eine durchgehende Frischmörtelschicht 22 ausbildet (Fig. 5).

Nach dem Bewässern wird eine zweite Mauersteinreihe 26 auf die Frischmörtelschicht 22 aufgelegt und vorzugsweise mit einigen Hammerschlägen fixiert. Dabei werden die einzelnen Mauersteine 23 wiederum auf Stoß, unter Ausbildung einer Stoßfuge, aneinander gesetzt. Durch das Aufsetzen und Eindrücken der Mauersteine 23 auf bzw. in die Frischmörtelschicht 22 werden die einzelnen zueinander benachbarten Frischmörtelschichten weiter miteinander vermischt.

Vorteil der erfindungsgemäßen Trockenmörtelplatte 1 ist ihre Nachhaltigkeit aufgrund der Verwendung des Lehmpulvers als Bindemittel, insbesondere bei der Verwendung für die Herstellung eines Lehmsteinmauerwerks, bevorzugt eines Lehmplansteinmauerwerks aus Lehmplansteinen. Ein derartiges monolithisches Lehmsteinmauerwerk ist sortenrein rückbaubar.

Zudem wurde überraschenderweise festgestellt, dass die erfindungsgemäße Trockenmörtelplatte eine deutlich geringere Verarbeitungszeit aufweist als herkömmlicher Lehmmauermörtel. Denn herkömmlicher Lehmmauermörtel wird auf der Baustelle zur Frischmasse angerührt und muss dann 30 Minuten stehen gelassen werden und dickt dabei nach. Anschließend wird er deshalb nochmals aufgerührt, um die notwendige Konsistenz für den Auftrag mit einem Mörtelschlitten zu erreichen. Im Gegensatz dazu können die Mauersteine bei der erfindungsgemäßen Trockenmörtelplatte bereits einige Minuten nach der Bewässerung auf den Frischmörtel aufgesetzt werden. Dies war nicht vorhersehbar.

Im Rahmen der Erfindung wurde zudem überraschenderweise festgestellt, dass sich die erfindungsgemäße Trockenmörtelplatte aufgrund des Lehmpulvers bei der Durchwässerung anders verhält als eine zementbasierte Trockenmörtelplatte, weshalb für eine optimale Durchwässerung eine andere Kornverteilung und Zusammensetzung der Trockenmörtelmischung vorteilhaft ist. Im Gegensatz zu Zement quillt Lehmpulver auf und hat zudem eine sehr schmierige Konsistenz, was das Durchsickern des Wassers an die Unterseite der Trockenmörtelplatte erschwert. Insbesondere wurde im Rahmen der Erfindung überraschenderweise herausgefunden, dass ein hoher Anteil an Mikrohohlglaskugeln mit einer Korngröße einer Korngröße ≤ 125 µm, bevorzugt ≤ 63 µm, für eine gute Durchwässerung der Trockenmörtelplatte sehr vorteilhaft ist. Offenbar wird dadurch die Kornverteilung so verändert, dass eine Dränwirkung erzeugt wird.

Überraschend war insbesondere dabei, dass auch bei einem hohen Gehalt an Mikrohohlglaskugeln immer noch ein ausreichender Zusammenhalt der Trockenmörtelplatte 1 besteht. Die Trockenmörtelplatte ist immer noch gut handlebar ohne zu zerbrechen. Dies war deshalb überraschend, da das Klebemittel nicht wie insbesondere bei den offenporigen Zuschlagstoffkörnern in die geschlossenzelligen Körner eindringen kann. Eine mechanische Verkrallung des erhärteten Klebemittels in den Körnern findet also nicht statt.

Es wurde im Rahmen der Erfindung zudem überraschenderweise festgestellt, dass die Mikrohohlglaskugeln die Konsistenz des Frischmörtels verbessern. Eine richtige und gleichmäßige Konsistenz, insbesondere auch in vertikaler Richtung gesehen, ist wichtig, damit sich die Mauersteine gut in den Frischmörtel eindrücken lassen und dadurch ein guter Verbund zwischen den Mauersteinen der einzelnen Steinreihen gewährleistet wird. Im Gegensatz zu herkömmlichem Mörtel kann die Konsistenz bei der Trockenmörtelmischung aber gerade nicht durch gleichmäßiges Vermischen hergestellt werden. Die Mikrohohlglaskugeln, sorgen für eine schaumartige aber stabile Konsistenz, so dass sich die Mauersteine gut eindrücken lassen aber der Frischmörtel auch nicht zu viel zusammengedrückt wird, sondern sich in den Mauersteinen verkrallt.

Im Rahmen der Erfindung liegt es dabei selbstverständlich auch, dass anstelle der Mikrohohlglaskugeln oder zusätzlich dazu andere kugelförmige, geschlossenzellige oder geschlossenporige Körner, bevorzugt Leichtstoffkörner, enthalten sind, welche die oben beschriebenen Effekte haben. Beispielsweise kann es sich um geschlossenporige Blähglaskörner handeln.

Im Rahmen der Erfindung liegt es dabei auch, die erfindungsgemäßen Trockenmörtelplatten 1 zum Befestigen von Fliesen oder ähnlichen Platten oder zum Befestigen von Dämmplatten oder ähnlichen Fassadenelementen zu verwenden oder zum Erzeugen einer Wand ohne zusätzlichen Wandbildner.

Zudem liegt es im Rahmen der Erfindung, die Trockenmörtelplatte als mehrschichtige Trockenmörtelplatte mit mehr als zwei Trockenmörteldeckschichten oder als einschichtige Trockenmörtelplatte nur mit einer Trockenmörteldeckschicht herzustellen. Im letzteren Fall wird keine zweite trockene Mischung auf das Trägerband aufgebracht und die zweite Mörtelauftrageinrichtung entfällt. Bei einer mehrschichtigen Trockenmörtelplatte wird entsprechend die entsprechende Anzahl an ersten bzw. zweiten trockenen Mischungen aufgebracht, wobei diese Mischungen unterschiedlich sein können. Auch kann die Trockenmörtelplatte mehrere Trägerbänder aufweisen. Die Herstellung erfolgt analog, in dem abwechselnd die jeweilige Anzahl an trockenen Mischungen und ein Trägerband in die Kassettenformen eingebracht werden.

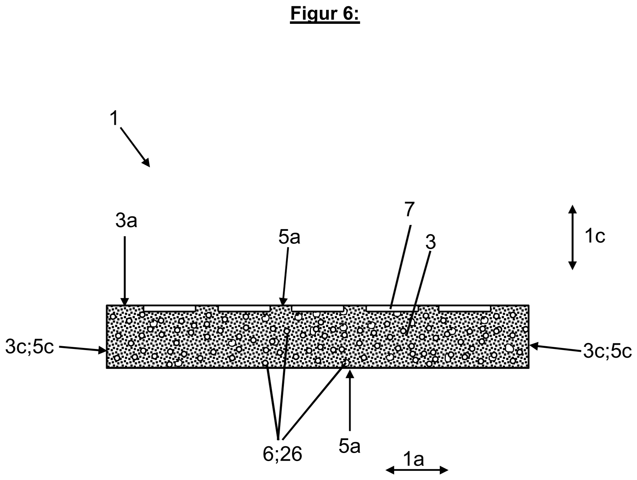

Des Weiteren kann das Trägerband als Bewehrungsmittel auch ganz entfallen. Die Trockenmörtelplatte 1 ist dann z.B. einschichtig aufgebaut und besteht aus einer einzigen Trockenmörtelschicht 3 (Fig. 6). Vorzugsweise weist die Trockenmörtelschicht 3 in diesem Fall eine Bewehrung in Form von Einzelfasern auf, die in der Trockenmörtelschicht 3 verteilt sind. Die Herstellung erfolgt wie oben beschrieben, mit dem Unterschied, dass kein Trägerband auf die erste trockene Mischung aufgelegt wird. Auch kann die Trockenmörtelplatte ohne Trägerband auch mehrschichtig ausgebildet sein, also aus mehreren übereinander angeordneten, miteinander mittels des Klebemittels verbundenen, Trockenmörtelschichten bestehen (nicht dargestellt). Die dafür notwendigen trockenen Mischungen werden nach und nach in die Kassettenformen eingestreut.

Des Weiteren kann es sich bei dem Trockenmörtelformkörper auch um ein Trockenmörtelband handeln. Vorzugsweise wird das Trockenmörtelband nach der Herstellung auf eine Rolle aufgewickelt. Dazu kann es vorgesehen sein, dass die Trockenmörtelschichten jeweils eine Kerbe aufweisen oder sogar unterbrochen sind, um eine ausreichende Biegsamkeit des Trockenmörtelbands zu erreichen. Auch das Trockenmörtelband kann vorteilhafterweise die wannenartigen Vertiefungen in einer Bandoberseite aufweisen. Die Herstellung des Trockenmörtelbands erfolgt analog wie die Herstellung der Trockenmörtelplatt durch Einbringen zumindest einer trockenen Mischung aus der Trockenmörtelmischung und Klebemittel in eine Form, Auflegen des Trägerbands, Aufbringen zumindest einer trockenen Mischung aus der Trockenmörtelmischung und Klebemittel auf das Trägerband, Wärmebehandlung und nachfolgendes Abkühlen.

Abschließend wird darauf hingewiesen, dass alle genannten, insbesondere beanspruchten, Merkmale der Trockenmörtelplatte oder des Trockenmörtelbands, insbesondere der Trockenmörtelschicht, und des Verfahrens für sich genommen und in jeglicher Kombination besonders vorteilhaft und Gegenstand der vorliegenden Erfindung sind.

Zudem sind die jeweils angegebenen Ober- und Untergrenzen der einzelnen Bereichsangaben erfindungsgemäß alle miteinander kombinierbar.

Im Folgenden werden noch beispielhafte erfindungsgemäße Rezepturen (Ausführungsbeispiel AF) in M.-% der Trockenmörtelmischung der erfindungsgemäßen Trockenmörtelplatte angegeben. Die Trockenmörtelplatten wurden jeweils hergestellt durch Herstellung einer trockenen, schüttfähigen Mischung aus den Bestandteilen der Trockenmörtelmischung und 14 M.-% Kleber bezogen auf die Trockenmasse der Mischung. Die Mischung wurde in eine beheizte Form eingestreut, abgezogen und für 80s gepresst. Hierzu wurde ein ebenfalls beheiztes Formenoberteil verwendet. Die Temperatur der Form und des Formenoberteils betrug jeweils 140 °C. Nach dem Entformen wurden die hergestellten Trockenmörtelplatten abkühlen gelassen.

**Tabelle 1: Verwendete Rohstoffe**

| | **Hersteller, Name** | **Korngröße** |
|---|---|---|
| Lehmpulver | Sibelco, FT-U | 88,76 M.-% ≤ 63µm |
| Quarzsand | Cemex Quarzsandwerke Wellmersdorf | 0,1-0,5 mm |
| Mikrohohlglaskugeln | 3M | d₅₀ = 41 µm, d₉₀ = 68 µm, 99,9 Vol.% < 100 µm (Laserlichtbeugung), Schüttdichte 0,14 kg/dm³ |
| Kalksteinmehl | Omya 1-GU | 98,6 M.-% ≤ 90 µm |
| Verdickungsmittel | Xanthan | |
| Wasserretentionsmittel | Methylcellulose | |
| Klebemittel (Pulver) | Harnstoff | |

**Tabelle 2: Zusammensetzungen von Trockenmörtelmischungen**

| | **AF1** | **AF2** | **AF3** |
|---|---|---|---|
| | M.-% | M.-% | M.-% |
| Lehmpulver | 74,8 | 49,7 | 44,0 |
| Quarzsand | 5,75 | 6,0 | 42,0 |
| Mikrohohlglaskugeln | 18,74 | 14,0 | 13,3 |
| Kalksteinmehl | - | 29,59 | - |
| Verdickungsmittel | 0,01 | 0,01 | 0,1 |
| Wasserretentionsmittel | 0,7 | 0,7 | 0,6 |
| **Summe** | 100 | 100 | 100 |

## Patentansprüche

1. Trockenmörtelplatte (1) oder Trockenmörtelband, aufweisend zumindest eine Trockenmörtelschicht (3), wobei die Trockenmörtelschicht (3) eine mittels eines wasserlöslichen, schmelzbaren Klebemittels verfestigte Trockenmörtelmischung aufweist, wobei die Trockenmörtelmischung eine Bindemittelkomponente aus zumindest einem mineralischen Bindemittel und zumindest eine, vorzugsweise mineralische, Körnung aus inerten Körnern (26) aufweist,
**dadurch gekennzeichnet, dass**
die Bindemittelkomponente Lehmpulver aufweist.

2. Trockenmörtelplatte (1) oder Trockenmörtelband nach Anspruch 1,
**dadurch gekennzeichnet, dass**
die Trockenmörtelmischung zumindest einen, bevorzugt mineralischen, Zuschlagstoff und/oder eine Zusatzstoffkomponente aus zumindest einem, vorzugsweise mineralischen, Zusatzstoff, aufweist.

3. Trockenmörtelplatte (1) oder Trockenmörtelband nach Anspruch 1 oder 2,
**dadurch gekennzeichnet, dass**
a) die Trockenmörtelmischung kugelförmige geschlossenporige und/oder geschlossenzellige Körner (26), vorzugsweise Leichtstoffkörner (6), mit einer Korngröße ≤ 125 µm, bestimmt mittels Laserlichtbeugung gemäß ISO 13320:2020-01, aufweist, vorzugsweise in einer Volumenmenge von 46 bis 66 Vol.-%, bevorzugt 50 bis 65 Vol.-%, besonders bevorzugt 54 bis 63 Vol.-%, bezogen auf das Gesamtvolumen der Trockenmörtelmischung,
und/oder
b) die Trockenmörtelmischung kugelförmige geschlossenporige und/oder geschlossenzellige Körner (26), vorzugsweise Leichtstoffkörner (6), mit einer Korngröße ≤ 63 µm, bestimmt mittels Laserlichtbeugung gemäß ISO 13320:2020-01, aufweist, vorzugsweise in einer Volumenmenge von 46 bis 66 Vol.-%, bevorzugt 50 bis 65 Vol.-%, besonders bevorzugt 54 bis 63 Vol.-%, aufweist, bezogen auf das Gesamtvolumen der Trockenmörtelmischung.

4. Trockenmörtelplatte (1) oder Trockenmörtelband nach einem der vorhergehenden Ansprüche,
**dadurch gekennzeichnet, dass**
die Trockenmörtelmischung Mikrohohlglaskugeln aufweist,
wobei die Trockenmörtelmischung vorzugsweise
a) Mikrohohlglaskugeln mit einer Korngröße ≤ 125 µm, bestimmt mittels Laserlichtbeugung gemäß ISO 13320:2020-01, aufweist, vorzugsweise in einer Menge von 11 bis 22 M.-%, bevorzugt 11 bis 21 M.-% oder 13 bis 21 M.-%, besonders bevorzugt 11 bis 20 M.-% oder 15 bis 20 M.-%, bezogen auf die Trockenmasse der Trockenmörtelmischung,
und/oder
b) Mikrohohlglaskugeln mit einer Korngröße ≤ 63 µm, bestimmt mittels Laserlichtbeugung gemäß ISO 13320:2020-01, aufweist, vorzugsweise in einer Menge von 11 bis 22 M.-%, bevorzugt 11 bis 21 M.-% oder 13 bis 21 M.-%, besonders bevorzugt 11 bis 20 M.-% oder 15 bis 20 M.-%, aufweist, bezogen auf die Trockenmasse der Trockenmörtelmischung.

5. Trockenmörtelplatte (1) oder Trockenmörtelband nach Anspruch 4,
**dadurch gekennzeichnet, dass**
die Trockenmörtelmischung
a) Mikrohohlglaskugeln mit einer Korngröße ≤ 125 µm, bestimmt mittels Laserlichtbeugung gemäß ISO 13320:2020-01, aufweist, vorzugsweise in einer Volumenmenge von 46 bis 66 Vol.-%, bevorzugt 50 bis 65 Vol.-%, besonders bevorzugt 54 bis 63 Vol.-%, bezogen auf das Gesamtvolumen der Trockenmörtelmischung,
und/oder
b) Mikrohohlglaskugeln mit einer Korngröße ≤ 63 µm, bestimmt mittels Laserlichtbeugung gemäß ISO 13320:2020-01, aufweist, vorzugsweise in einer Volumenmenge von 46 bis 66 Vol.-%, bevorzugt 50 bis 65 Vol.-%, besonders bevorzugt 54 bis 63 Vol.-%, aufweist, bezogen auf das Gesamtvolumen der Trockenmörtelmischung.

6. Trockenmörtelplatte (1) oder Trockenmörtelband nach Anspruch 4 oder 5,
**dadurch gekennzeichnet, dass**
a) die Mikrohohlglaskugeln einen d₅₀-Wert von 20 bis 80 µm, bevorzugt 30 bis 70 µm, bestimmt mittels Laserlichtbeugung gemäß ISO 13320:2020-01, und/oder einen d₉₀-Wert von 40 bis 100 µm, bevorzugt 50 bis 85 µm, bestimmt mittels Laserlichtbeugung gemäß ISO 13320:2020-01, aufweisen,
und/oder
b) die Mikrohohlglaskugeln eine Schüttdichte gemäß DIN EN 459-2:2010-12, von 0,06 bis 0,50 g/cm³, bevorzugt von 0,07 bis 0,17 g/cm³, aufweisen,
und/oder
c) die Mikrohohlglaskugeln eine Partikelrohdichte von 0,10 bis 0,60 g/cm³, bevorzugt von 0,13 bis 0,50 g/cm³, besonders bevorzugt von 0,13 bis 0,17 g/cm³, aufweisen.

7. Trockenmörtelplatte (1) oder Trockenmörtelband nach einem der Ansprüche 2 bis 6,
**dadurch gekennzeichnet, dass**
die Zusatzstoffkomponente, vorzugsweise zusätzlich zu den Mikrohohlglaskugeln, als Zusatzstoff Gesteinsmehl, vorzugsweise Kalksteinmehl und/oder Dolomitmehl und/oder Quarzmehl, und/oder gefälltes Calciumcarbonat (PCC) aufweist, wobei der Gesamtanteil an weiterem Zusatzstoff vorzugsweise ≤ 50 M.-%, bevorzugt ≤ 30 M.-% und/oder mindestens 4 M.-%, bevorzugt mindestens 6 M.-%, bezogen auf die Trockenmasse der Trockenmörtelmischung beträgt.

8. Trockenmörtelplatte (1) oder Trockenmörtelband nach einem der vorhergehenden Ansprüche,
**dadurch gekennzeichnet, dass**
die Trockenmörtelmischung eine Leichtstoffkomponente mit zumindest einem Leichtstoff aus Leichtstoffkörnern (6) aufweist.

9. Trockenmörtelplatte (1) oder Trockenmörtelband nach Anspruch 8,
**dadurch gekennzeichnet, dass**
a) die Leichtstoffkomponente zumindest einen geschlossenporigen Leichtzuschlagstoff aufweist, vorzugsweise Blähglas oder Blähton,
und/oder
b) die Trockenmörtelmischung offenporigen Leichtzuschlag in einer Menge von ≤ 10 M.-%, vorzugsweise ≤ 5 M.-%, bevorzugt ≤ 2 M.-%, bezogen auf die Trockenmasse der Trockenmörtelmischung aufweist, besonders bevorzugt keinen offenporigen Leichtzuschlag aufweist.

10. Trockenmörtelplatte (1) oder Trockenmörtelband nach einem der vorhergehenden Ansprüche,
**dadurch gekennzeichnet, dass**
die Trockenmörtelmischung zumindest einen normalen Zuschlagstoff, vorzugsweise Quarzsand, aufweist, vorzugsweise in einer Gesamtmenge an normalem Zuschlag von 3 bis 55 M.-%, bevorzugt 3 bis 20 M.-%, besonders bevorzugt 4 bis 15 M.-%, bezogen auf die Trockenmasse der Trockenmörtelmischung.

11. Trockenmörtelplatte (1) oder Trockenmörtelband nach einem der vorhergehenden Ansprüche,
**dadurch gekennzeichnet, dass**
a) die Trockenmörtelmischung mindestens 30 M.-%, bevorzugt mindestens 40 M.-%, besonders bevorzugt mindestens 50 M.-%, Lehmpulver aufweist, bezogen auf die Trockenmasse der Trockenmörtelmischung,
und/oder
b) die Trockenmörtelmischung 30 bis 86 M.-%, bevorzugt 40 bis 78 M.- %, besonders bevorzugt 50 bis 78 M.-% Lehmpulver aufweist, bezogen auf die Trockenmasse der Trockenmörtelmischung,
und/oder
c) die Bindemittelkomponente zu mindestens 80 M.-%, bevorzugt zu mindestens 90 M.-%, bevorzugt zu 100 M.-% aus Lehmpulver besteht.

12. Trockenmörtelplatte (1) oder Trockenmörtelband nach einem der vorhergehenden Ansprüche,
**dadurch gekennzeichnet, dass**
die Trockenmörtelmischung zumindest ein Zusatzmittel, vorzugsweise zumindest ein, bevorzugt organisches, Verdickungsmittel und/oder zumindest ein, bevorzugt organisches, Wasserretentionsmittel aufweist.

13. Trockenmörtelplatte (1) oder Trockenmörtelband nach einem der vorhergehenden Ansprüche,
**dadurch gekennzeichnet, dass**
a) die Trockenmörtelschicht (3) eine Feststoff-Klebematrix aus dem wasserlöslichen Klebemittel aufweist, welche die Bestandteile der Trockenmörtelmischung miteinander verbindet,
und/oder
b) das Klebemittel einen Schmelzpunkt von 120 bis 190 °C, bevorzugt 140 bis 150 °C aufweist.

14. Trockenmörtelplatte (1) oder Trockenmörtelband nach einem der vorhergehenden Ansprüche,
**dadurch gekennzeichnet, dass**
a) die Trockenmörtelplatte (1) oder das Trockenmörtelband ein Trägerband (2) aufweist, das einseitig mit zumindest einer Trockenmörtelschicht (3) gemäß einem der vorhergehenden Ansprüche abgedeckt ist,
und/oder
b) das Trägerband (2) beidseits mit zumindest einer Trockenmörtelschicht (3) gemäß einem der vorhergehenden Ansprüche abgedeckt ist, wobei die Trockenmörtelschichten (3) vorzugsweise in eine Plattenhöhenrichtung (1c) zueinander fluchtend angeordnet sind.

15. Trockenmörtelplatte (1) oder Trockenmörtelband nach Anspruch 14,
**dadurch gekennzeichnet, dass**
die Feststoff-Klebematrix jeweils die Bestandteile der Trockenmörtelmischung(en) miteinander und mit dem Trägerband (2) verbindet.

16. Trockenmörtelplatte (1) oder Trockenmörtelband nach einem der vorhergehenden Ansprüche,
**dadurch gekennzeichnet, dass**
die Trockenmörtelplatte (1) eine Schichtoberseite (3a) aufweist, die eine Plattenoberseite (5a) der Trockenmörtelplatte (1) oder eine Bandoberseite des Trockenmörtelbands bildet, wobei in der Plattenoberseite (5a) oder der Bandoberseite zumindest eine wannenartige Vertiefung (7) zur Aufnahme von Wasser vorhanden ist.

17. Verwendung von Lehmpulver in einer Trockenmörtelplatte (1) oder einem Trockenmörtelband nach einem der vorhergehenden Ansprüche als mineralisches Bindemittel der Bindemittelkomponente der zumindest einen Trockenmörtelmischung.

18. Verwendung von Lehmpulver zur Herstellung einer Trockenmörtelplatte (1) oder eines Trockenmörtelbands nach einem der Ansprüche 1 bis 16.

19. Verwendung nach Anspruch 18,
**dadurch gekennzeichnet, dass**
das Lehmpulver in einer trockenen, schüttfähigen, aus der Trockenmörtelmischung und dem Klebemittel bestehenden Mischung für die Herstellung der zumindest einen Trockenmörtelschicht (3) verwendet wird.

20. Verfahren zur Herstellung einer Trockenmörtelplatte (1) oder eines Trockenmörtelbandes nach einem der Ansprüche 1 bis 16, mit folgenden Verfahrensschritten:
a) Einbringen zumindest einer trockenen, schüttfähigen Mischung (15) aus der Trockenmörtelmischung und dem Klebemittel in eine nach oben offene Form, vorzugsweise in eine Kassettenform (16),
b) Vorzugsweise Auflegen des Trägerbandes (2) auf die oberste der trockenen Mischungen (15),
c) Vorzugsweise Aufbringen zumindest einer weiteren trockenen, schüttfähigen Mischung (20) aus der Trockenmörtelmischung und dem Klebemittel auf das Trägerband (2),
d) Gegebenenfalls zumindest einmaliges Wiederholen der Schritte b) und c),
e) Gleichzeitiges Beaufschlagen der Mischung(en) (15;20) und gegebenenfalls des Trägerbandes (2) mit Druck und Temperatur, so dass das Klebemittel aufgeschmolzen wird und sich in jeder Mischung (15;20) verteilt und die Bestandteile der jeweiligen Trockenmörtelmischung miteinander und gegebenenfalls mit dem Trägerband (2) verbindet,
f) Abkühlen und Erhärten lassen des Klebemittels.

21. Verfahren nach Anspruch 20,
**dadurch gekennzeichnet, dass**
in der zumindest eine trockenen, schüttfähigen Mischung das Lehmpulver verwendet wird.

22. Verfahren nach Anspruch 20 oder 21,
**dadurch gekennzeichnet, dass**
für die Herstellung der zumindest einen trockenen, schüttfähigen Mischung das Lehmpulver verwendet wird.

23. Verfahren nach einem der Ansprüche 20 bis 22,
**dadurch gekennzeichnet, dass**
für die Herstellung der zumindest einen trockenen, schüttfähigen Mischung und/oder in der zumindest einen trockenen, schüttfähigen Mischung zumindest ein Bestandteil der Trockenmörtelmischung gemäß einem der Ansprüche 2 bis 12 verwendet wird.

24. Verfahren nach einem der Ansprüche 20 bis 23,
**dadurch gekennzeichnet, dass**
das Lehmpulver hergestellt wird durch Herstellung von Baulehm durch Aufbereitung, insbesondere Brechen, von Grubenlehm, und durch Siebung und Trocknung des aufbereiteten Baulehms.

25. Verwendung einer Trockenmörtelplatte (1) oder eines Trockenmörtelbands nach einem der Ansprüche 1 bis 16 oder hergestellt gemäß einem der Ansprüche 20 bis 24 zur Herstellung einer Frischmörtelschicht (22) zur Vermörtelung, vorzugsweise zur deckelnden Dünnbettvermörtelung, von Mauersteinen (23).
